# EUROPEAN PATENT APPLICATION

(11) **EP 4 542 481 A1**
(43) Date of publication of application: **23.04.2025**
(21) Application number: 23831322.5
(22) Date of filing: 23.06.2023
(51) Int. Cl.: G06Q 50/10

(54) **INFORMATION PROCESSING DEVICE, INFORMATION PROCESSING METHOD, AND PROGRAM**

(30) Priority: 30.06.2022 JP 2022106210
(71) Applicant: Sustech Inc., Tokyo 105-0014 (JP)
(72) Inventor: TANNO, Yusuke, Tokyo 105-0014 (JP); OHASHI, Akifumi, Tokyo 105-0014 (JP)
(74) Representative: RGTH
(86) International application number: PCT/JP2023/023408
(87) International publication number: WO 2024/004880

(57) **Abstract**

The present invention provides support to achieve goals with respect to a problem that burdens a corporation or a base thereof and that is relatively difficult to quantify, such as reducing emission of greenhouse effect gases. A service provider server 1 calculates, for target GHG emissions reductions set by a user, an extent to which additional reduction effort (such as a level to which an element has an impact on the reduction of GHG emissions) is required, on the basis of the current achievement level, and potential future achievement when predicted based on the current year-over-year reduction level. Elements, such as corporation or bases, and product group or Scope, that are expected to have an impact on reduction are identified on the basis of the calculation result, and recommendation information including the elements and specific solutions for reducing GHG emissions is presented to the user.

## Description

### TECHNICAL FIELD

The present invention relates to an information processing apparatus, an information processing method, and a program.

### BACKGROUND ART

Recently, there has been a global movement referred to as Task Force on Climate-related Financial Disclosures (TCFD) mainly among listed companies. In order to respond to TCFD, it is becoming mandatory to visualize and report carbon dioxide emissions of each base of each company. Conventionally, there have been CO2 emissions reduction technologies capable of realizing measurement of carbon dioxide emissions/reductions, visualization of carbon dioxide reductions, and provision of incentives from a viewpoint of cost (see, for example, Patent Document 1).

### Citation List

### Patent Document

Patent Document 1: Japanese Unexamined Patent Application, Publication No. 2020-207290

### DISCLOSURE OF THE INVENTION

### Problems to be Solved by the Invention

The current situation is, however, that it has not been considered yet how reduction is to be specifically implemented after setting a goal of each base of each company for calculated carbon dioxide reductions.

The present invention has been made in view of such a situation, and an object thereof is to provide support for achievement of a greenhouse gas emissions reduction goal of a company and its bases.

### Means for Solving the Problems

In order to achieve the above object, an information processing apparatus of one aspect of the present invention includes:
registration unit configured to, for each of items used for calculation of a user's greenhouse gas emissions, register an amount of activity in association with one or more such elements that the amount of activity changes thereby;
required reductions calculation unit configured to, based on target greenhouse gas emissions reductions to be achieved by a predetermined deadline set by the user and content registered by the registration unit, calculate a degree of greenhouse gas emissions that the user is required to make efforts to reduce by the predetermined deadline;
solution generation unit configured to identify an element among the one or more elements expected to be impactful to reduction based on a calculation result of the required reductions calculation unit and generate a solution about the element; and
solution presentation unit configured to present recommendation information including the identified element and the generated solution to the user.

### Effects of the Invention

According to the present invention, it is possible to provide support for achievement of a greenhouse gas emissions reduction goal of a company and its bases.

### BRIEF DESCRIPTION OF THE DRAWINGS

FIG. 1 is a block diagram showing a configuration example of one embodiment of an information processing system of the present invention;
FIG. 2 is a block diagram showing an example of a hardware configuration of a service provider server in the information processing system shown in FIG. 1;
FIG. 3 is a functional block diagram showing an example of a functional configuration of the service provider server of FIG. 2;
FIG. 4 is a flowchart showing operation of the service provider server of FIGS. 2 and 3;
FIG. 5A is a diagram showing a dashboard screen (by fiscal year) displayed on each user's My Page on a website disclosed by the service provider server of FIGS. 2 and 3;
FIG. 5B is a diagram showing a dashboard screen (by fiscal year) displayed on the user's My Page on the website disclosed by the service provider server of FIGS. 2 and 3;
FIG. 6 is a diagram showing a dashboard screen displayed on the user's My Page on the website disclosed by the service provider server of FIGS. 2 and 3;
FIG. 7 is a diagram showing a dashboard screen displayed on the user's My Page on the website disclosed by the service provider server of FIGS. 2 and 3; and
FIG. 8 is a diagram showing a database management screen on the user's My Page on the website disclosed by the service provider server of FIGS. 2 and 3.

### PREFERRED MODE FOR CARRYING OUT THE INVENTION

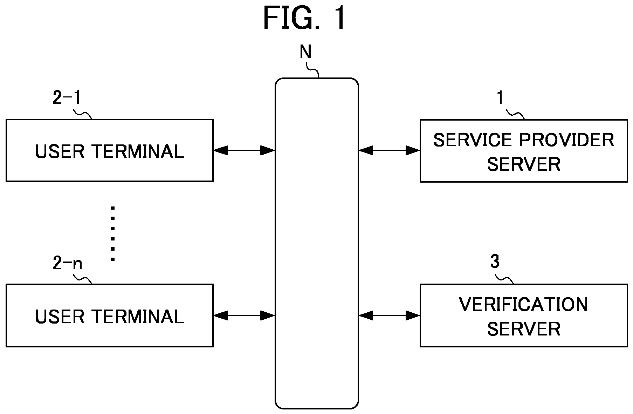

An information processing apparatus of an embodiment will be described below using drawings. FIG. 1 is a block diagram showing a configuration example of one embodiment of an information processing system of the present invention.

In the present service, for each of items used for calculation of a user's greenhouse gas (hereinafter referred to as "GHG") emissions, for example, CO2, an amount of activity is registered as actual results, in association with one or more such elements that the amount of activity changes thereby (for example, by year/by month, by corporation, by base, by Scope, and by Category), and, based on target GHG emissions reductions to be achieved by a predetermined deadline set by the user and the registered actual results, a degree of GHG emissions that the user is required to make efforts to reduce by the predetermined deadline is calculated. Then, an element expected to be impactful to reduction (expected to have a level of emissions reduction effect higher than a predetermined value) is identified based on a result of the calculation; a solution about the element is generated; and recommendation information including the identified element and the generated solution is presented to the user.

The information processing system applied to the present service is configured by a service provider server 1, user terminals 2-1 to 2-n (n is an arbitrary integer value), and a verification server 3 being connected to a network N such as the Internet, for example, as shown in FIG. 1.

The service provider server 1 is an information processing apparatus managed by a service provider of the present service, and discloses a website to a user registered as a member. For a GHG emissions reduction goal set by the user, the service provider server 1 makes a trial calculation of a scale of requiring additional efforts for reduction (a degree of reduction in emissions of an impactful element, or the like) from actual results (a degree of achievement in the current situation, expected achievement in the future when estimated at the current level compared with the previous year's reduction level, and the like). Based on a result of the trial calculation, a corporation, a base, a product group, Scope, or Category, which is expected to be impactful to reduction, is identified and is recommended by AI together with a specific solution for reduction.

Each user terminal 2 is an information processing apparatus, for example, a personal computer, a tablet, or a smartphone that accepts an operation of a person in charge in a user (a company) that desires to grasp GHG emissions of the company, its bases, and the like, or a person in charge in a user (a company) that desires to achieve a GHG emissions reduction goal. Each user accesses the website of the present service disclosed to those who have registered as members, from the user terminal 2, and registers target GHG emissions reductions to be achieved by a predetermined deadline, actual results, and the like. Then, by requesting for recommendation about a scale of requiring additional efforts for reduction, the user can obtain recommendation for a specific solution for reduction in GHG emissions.

Hereinafter, when it is not necessary to individually distinguish among the n users, the user terminals 2-1 to 2-n will be collectively referred to as the "user terminals 2".

In other words, each of the user terminals 2 can execute a series of processes, for example, as below as a process for obtaining recommendation for reduction in GHG emissions in cooperation with the service provider server 1. Here, a method for the "cooperation" is not especially limited. For example, the user terminal 2 can adopt a first method of having the service provider server 1 execute main processes while appropriately communicating with the service provider server 1, as the method for "cooperation". Further, for example, the user terminal 2 can adopt a second method of downloading and installing a dedicated application program (hereinafter simply referred to as the "application") from the service provider server 1 or an apparatus under the control of the service provider server 1, which is not shown, in advance to execute the main processes with the application, as the method for "cooperation". Or alternatively, a method of an appropriate combination of the first and second methods can also be adopted as the method for "cooperation". In an example below, however, description will be made on the assumption that the first method is adopted as the method for "cooperation". In the example below, even if the operation subject of a process is "the service provider server 1", it is merely exemplification, and it goes without saying that the operation subject may be "the user terminal 2" when implemented as appropriate.

In other words, in the present example, the service provider server 1 executes a series of processes for presenting recommendation information in response to a request for recommendation for achievement of a GHG emissions reduction goal, from each user, while appropriately communicating with the user terminal 2 and the verification server **3.**

In addition, the verification server 3 connected to the service provider server 1 via the network N is also included in the information processing system. The verification server 3 is an information processing apparatus managed by a third-party verification organization, for example, a standardization organization. The verification server 3 executes an input value verification process (validity checking) in response to a request for verification of an input value from the service provider server 1, by communicating with the service provider server 1, and returns a verification result about whether the input value is valid or not.

To summarize the above, the service provider server 1 can provide support for achievement of a goal, for a problem of a company and its bases that is relatively difficult to quantify, such as reduction in GHG emissions, by calculating, based on information registered by a user, a degree of GHG emissions that the user (a company or the like) is required to make efforts to reduce by a predetermined deadline, for example, by the end of the year, identifying an element expected to be impactful to reduction in GHG emissions based on a result of the calculation, and presenting recommendation information including a solution about the element to the user.

Thus, since the service provider server 1 executes main processes (processes in accordance with the first method described above) in the present embodiment, attention will be paid to the service provider server 1 in the information processing system of FIG. 1 to make the description below.

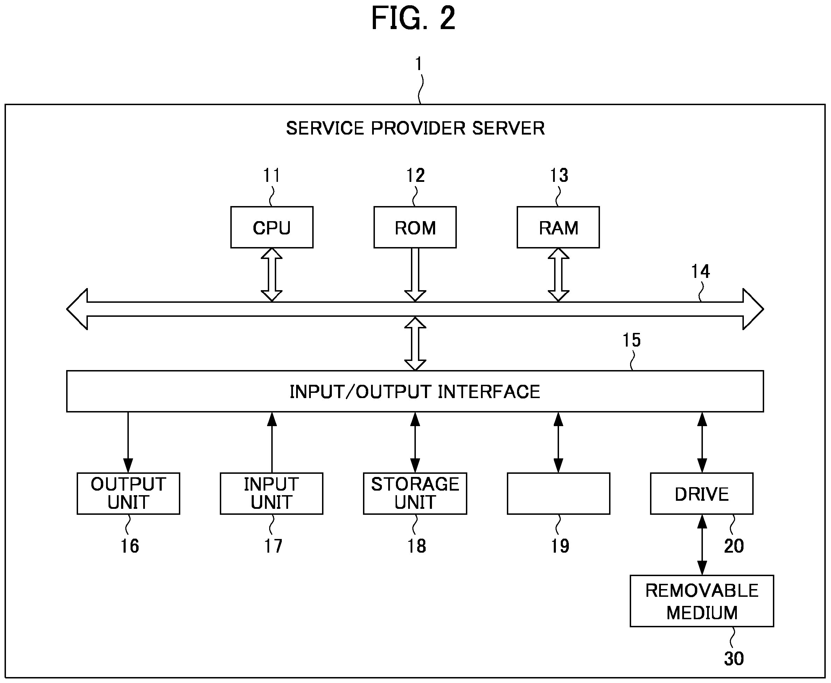

FIG. 2 is a block diagram showing an example of a hardware configuration of the service provider server 1 in the information processing system shown in FIG. 1.

The service provider server 1 includes a CPU (central processing unit) 11, a ROM (read-only memory) 12, a RAM (random access memory) 13, a bus 14, an input/output interface 15, an output unit 16, an input unit 17, a storage unit 18, a communication unit 19, and a drive 20.

The CPU 11 executes various kinds of processes in accordance with a program stored in the ROM 12 or a program loaded to the RAM 13 from the storage unit 18. In the RAM 13, data and the like required for the CPU 11 to execute the various kinds of processes are also appropriately stored.

The CPU 11, the ROM 12, and the RAM 13 are mutually connected via the bus 14. The input/output interface 15 is also connected to the bus 14. The output unit 16, the input unit 17, the storage unit 18, the communication unit 19, and the drive 20 are connected to the input/output interface 15.

The output unit 16 is configured with a display such as a liquid crystal display, a speaker, and the like, and outputs various kinds of information as images and voice. The input unit 17 is configured, for example, with a keyboard and outputs various kinds of information. The storage unit 18 is configured with a DRAM (dynamic random access memory) or the like and stores various kinds of data. The communication unit 19 performs communication with other apparatuses (for example, the user terminals 2 and the verification server 3 of FIG. 1) via the network N including the Internet.

The drive 20 is appropriately mounted with a removable medium 30 configured with a magnetic disk, an optical disk, a magneto-optical disk, a semiconductor memory, or the like. A program read from the removable medium 30 by the drive 20 is installed into the storage unit 18 as necessary. The removable medium 30 can also store the various kinds of data stored in the storage unit 18 similarly to the storage unit 18.

Each of the user terminals 2 and the verification server 3 of FIG. 1 can also have a configuration that is basically similar to the hardware configuration shown in FIG 2, though it is not shown. Therefore, description of the hardware configuration of each of the user terminals 2 and the verification server 3 will be omitted.

By cooperation between such various kinds of hardware of the service provider server 1 of FIG. 2 and various kinds of software, it becomes possible to execute the series of processes for presenting recommendation in response to a request for recommendation for achievement of a GHG emissions reduction goal from a user. Description will be made below on an example of a functional configuration of the service provider server 1 for executing such processes.

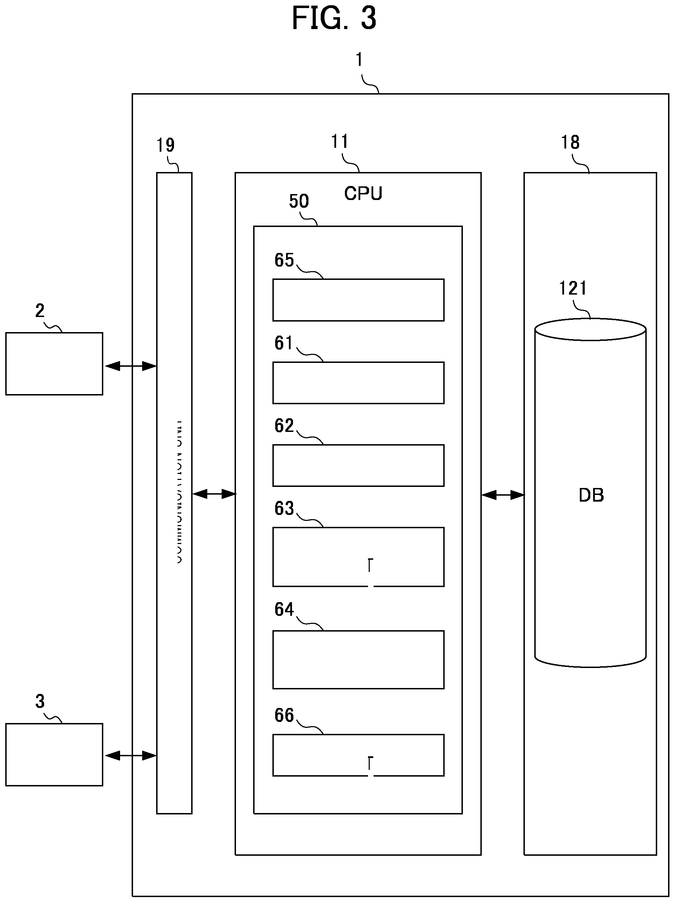

FIG. 3 is a functional block diagram showing the example of the functional configuration of the service provider server 1 of FIG. 2. As shown in FIG. 3, in the storage unit 18 of the service provider server 1, a database 121 (hereinafter referred to as the "DB 121") is stored.

In the DB 121, for each of items used for calculation of each user's GHG emissions, an amount of activity and one or more such elements that the amount of activity changes thereby

(for example, by year/by month, by corporation, by base, by Scope, and by Category) are associated and registered. Further, in the DB 121, information about each of the users registered as members (a company name, base names, a person in charge, login information such as a login ID and a password, a contact address, and the like) is stored. Furthermore, an individual intensity DB possessed by each of one or more member users (companies) can be registered with the DB 121 as a customized DB. Content of the customized DB is disclosed to others in response to each member user's (company's) request. The information registered by each member user (company) and each individual intensity DB registered with the customized DB can be verified by a third-party verification organization (for example, a standardization organization) in response to each member user's (company's) request to ensure the validity thereof. Each individual intensity DB registered with the customized DB may be disclosed according to the authorization level of the user.

As shown in FIG. 3, in the CPU 11 of the service provider server 1, a site management unit 50 functions when a website is published. The site management unit 50 includes a registration unit 61, a required reductions calculation unit 62, a solution generation unit 63, a solution presentation unit 64, a registered content presentation unit 65, an intensity disclosure unit 66, and the like.

For each of items used for calculation of each user's GHG emissions, the registration unit 61 registers an amount of activity in association with one or more such elements that the amount of activity changes thereby (for example, by year/by month, by corporation, by base, by Scope, and by Category). Specifically, the registration unit 61 receives an amount of activity for each of items used for calculation of GHG emissions, which has been transmitted from a user terminal 2, and registers the amount of activity with the DB 121 for each of the items, in association with one or more such elements that the amount of activity changes thereby (for example, by year/by month, by corporation, by base, by Scope, and by Category). Further, the registration unit 61 registers a plurality of items and intensity used for each of the plurality of items as initial registration.

The required reductions calculation unit 62 calculates, based on target GHG emissions reductions to be achieved by a predetermined deadline (for example, the end of the current year) set by each user and content registered by the registration unit 61, a degree (a rate or percentage) of GHG emissions that the user is required to make efforts to reduce by the predetermined deadline (for example, the end of the current year). Specifically, the required reductions calculation unit 62 calculates, based on target GHG emissions reductions to be achieved by a predetermined deadline (for example, the end of the current year) set by each user in the DB 121 and content of elements (for example, an amount of activity by year/by month, by corporation, by base, by Scope, by Category, and the like) registered with the DB 121 by the registration unit 61, a degree of GHG emissions that the user is required to make efforts to reduce by the end of the current year. Here, by multiplying an amount of activity for a predetermined item registered with the DB 121 by the registration unit 61 by intensity for the predetermined item, registered with the DB 121 by the registration unit 61, the required reductions calculation unit 62 calculates GHG emissions for the predetermined item. In other words, GHG emissions for a predetermined item are calculated by multiplying an amount of activity for the predetermined item registered by the registration unit 61 by intensity for the predetermined item registered by the registration unit 61.

The solution generation unit 63 identifies an element expected to be impactful to reduction (expected to have an emissions reduction effect higher than a threshold set in advance) based on a calculation result of the required reductions calculation unit 62 and generates a solution about the element. Specifically, the solution generation unit 63 has AI, and it identifies an element expected to have an emissions reduction effect higher than the threshold set in advance, based on a degree of further reduction (reduction of more XX tons or by XX percent) to be added to total reductions obtained as a calculation result of the required reductions calculation unit 62, and generates a solution about the element. If the user is a company that procures electric power from an electric power company and utilizes the electric power to manufacture products, the impactful element that contributes to reduction in GHG emissions is "electric power", and a solution such as "switching from a thermal power generation plan to a renewable energy power generation plan" is generated.

The solution presentation unit 64 presents recommendation information including the identified element and the generated solution to the user. Specifically, the solution presentation unit 64 presents recommendation information including the element identified by and the solution generated by the solution generation unit 63 on the screen of the user terminal 2 of the requesting user.

Here, a specific example of presentation of recommendation information is shown below. Example 1) The following are presented on the screen of the user terminal 2: "It is possible to, by causing Scope 2 emissions to be substantially 0 by switching to a renewable energy power generation plan, reduce overall GHG emissions by 15%."; "A renewable energy power generation plan provided by OO Electric Power Company can be introduced at a total unit price of 18.0 yen/kWh." -> Press the "Consult" button. Example 2) The following are presented on the screen of the user terminal 2: "It is possible to, by switching raw materials (example: flour) procured by OO Factory from foreign-made raw materials to domestically made raw materials, expect significant reduction in GHG emissions in transportation and distribution of Scope 3-Category 4." -> Press "Consult domestically made raw materials manufacturer" button.

The registered content presentation unit 65 visualizes (graphs) content registered by the registration unit 61 (intensity, an amount of activity, and the like for each element (for each item)) and presents it to the user. Specifically, the registered content presentation unit 65 visualizes content registered with the DB 121 by the registration unit 61 (distribution of GHG emissions for each item relative to GHG emissions of the whole company or of each base, and the like), for example, in the form of a pie graph or a table and presents it on the user terminal 2 of the user. Thereby, the problem of a company and its bases that is relatively difficult to quantify, such as reduction in greenhouse gas (GHG) emissions, is visualized in a form suitable for the company, and it is understood at a glance which element accounts for a large proportion, and the like. Therefore, it is possible to provide support for achievement of a goal.

The intensity disclosure unit 66 discloses the intensity used for calculation of a user's GHG emissions registered by the registration unit 61 to another user (to the public). Specifically, when an element is specified by another user who has accessed the website, the intensity disclosure unit 66 discloses intensity corresponding to the element to the other user (to the public). By disclosing (intensity for each item of) each user's individual DB, which is covered by a guarantee by its validity having been verified by the verification server 3 of a predetermined third-party organization, for example, a standardization organization, the intensity disclosure unit 66 can disclose reliable intensity.

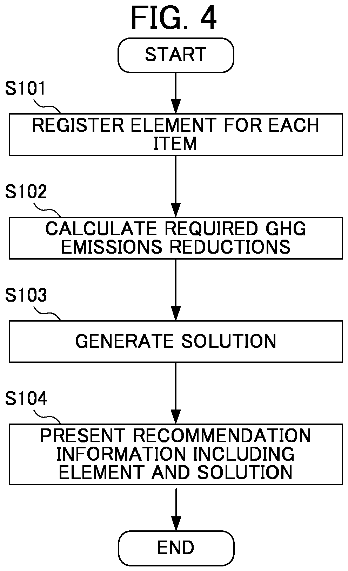

Next, operation of the service provider server 1 of the embodiment will be described with reference to flowchart in FIG. 4. FIG. 4 is a flowchart showing the operation of the service provider server 1 of FIGS. 2 and 3;

When an individual DB registration operation is performed by a user on the user's My Page of the website or by an application of the user terminal 2, the service provider server 1 executes a process of registering the user's individual DB with the DB 121. Specifically, at step S101 of FIG. 4, the registration unit 61 of the service provider server 1 registers, for each of items used for calculation of the user's GHG emissions, an amount of activity with the DB 121 in association with one or more such elements that the amount of activity changes thereby.

Next, when the user requests for presentation of a solution for achieving a GHG emissions reduction goal by a predetermined deadline, by operating the user terminal 2, the required reductions calculation unit 62 calculates, based on target GHG emissions reductions to be achieved by the predetermined deadline, which has been set by the user, and content registered with the DB 121 by the registration unit 61, a degree of GHG emissions that the user is required to make efforts to reduce by the predetermined deadline at step S102.

After calculating the degree, the solution generation unit 63 identifies an element expected to be impactful to reduction based on a calculation result of the required reductions calculation step of step S102 and generates a solution about the element at step S103.

After generating the solution, the solution presentation unit 64 presents recommendation information including the identified element and the generated solution to the user at step S104.

Thus, it is possible to provide support for achievement of a greenhouse gas emissions reduction goal of a company and its bases, by registering, for each of items, an amount of activity in association with one or more such elements that the amount of activity changes thereby, calculating, based on the registered content and target GHG emissions reductions to be achieved by a predetermined deadline set by a user in advance, a degree of GHG emissions that the user is required to make efforts to reduce by the predetermined deadline, identifying an element expected to be impactful to reduction, and presenting recommendation information including the element and a solution therefor to the user.

Here, description will be made on the following functions that the service provider server 1 of the embodiment is equipped with:
[1] greenhouse gas emissions reduction solution recommendation function; and
[2] DB disclosure function of performing construction, quality assurance, general publication, and generalization of master DB. First, description will be made on [1] GHG emissions reduction solution recommendation function. In this recommendation function, when a request is made by a user, emissions by element (by year/by month, by corporation, by base, by Scope, and by Category) are visualized on a dashboard, based on data of GHG emissions registered by the user. In the recommendation function, for target GHG emissions reductions set by the user, AI makes a trial calculation of (calculates) a scale of requiring additional reduction efforts (further reduction of more XX tons or by XX percent from current GHG emissions reductions) based on a degree of achievement in the current situation, and expected achievement in the future when estimated at the current level compared with the previous year's reduction level. Then, in the recommendation function, an element (a corporation, a base, a product group, Scope, Category, or the like) expected to be impactful to reduction in GHG emissions (i.e., expected to have a reduction effect of a predetermined value or higher) is identified based on a result of the trial calculation (calculation), and AI generates recommendation information including the element and a specific solution for reduction in GHG emissions and presents the recommendation information to the requesting user.

Here, an example of recommendation will be described. "It is possible to, by causing Scope 2 emissions to be substantially 0 by switching to a renewable energy power generation plan, reduce overall GHG emissions by 15%." "A renewable energy power generation plan provided by OO Electric Power Company can be introduced at a total unit price of 18.0 yen/kWh." -> Press the "Consult" button. "It is possible to, by switching raw materials (example: flour) procured by OO Factory from foreign-made raw materials to domestically made raw materials, expect significant reduction in GHG emissions in transportation and distribution of Scope 3- Category 4." -> Press "Consult domestically made raw materials manufacturer" button.

Next, description will be made on [2] DB disclosure function of performing construction, quality assurance, general publication, and generalization of master DB. In this case, calculation of GHG emissions is performed by "amount of activity" times "intensity". If the "amount of activity" does not decrease, the only way to reduce GHG emissions is to decrease "intensity". When a numerical value of "Emission intensity database for calculating greenhouse gas emissions by organizations throughout the supply chain" that is annually updated and published by a public organization such as Ministry of the Environment or a standard DB such as "LCI Database IDEA" published by a general incorporated foundation Sustainable Management Promotion Organization (SuMPO) is used as "intensity", self-help efforts and reduction efforts by suppliers are not reflected, and emissions are not substantially decreased for Scope 3.

Therefore, disclosure of individual "intensity" for each supplier is requested, and a plurality of companies are preparing to disclose "intensity" for their own products. The service provider server 1 includes an interface (a customized DB management screen 310 of FIG. 16 or the like) through which such an individual intensity DB of each user company can be registered with the system (the DB 121 of the service provider server 1) as a "customized DB". Content (numeric values, units, and the like of intensity) registered with the "customized DB" can be freely referred to at the time of registering data. In the future, in order for each user company to refer to its individual intensity DB for each supplier, a mechanism is required which is for performing integrated management of such individual intensity DBs to make it possible to refer to the individual intensity DBs across companies and industries. Meanwhile, if the quality of the individual intensity DB individually created by each user company is poor, many companies are affected by the quality by referring to the individual intensity DB.

Therefore, on the present website, it is possible to, at the time of disclosing the individual intensity DB of each company to the public, disclose the individual intensity DB after verifying the validity of the individual intensity DB in cooperation with the verification server 3 of a third-party standardization organization or the like and guaranteeing the content of the individual intensity DB. The guaranteed individual intensity DB of each user company is managed in an integrated manner by the DB 121 (a master DB) of the service provider server 1 and can be widely used. Efficiency of Operational efficiency of visualization of GHG emissions is significantly improved, and domestic and international visualization is advanced more, which provides impetus to reduction in GHG emissions. Further, by the individual intensity DB of each company being registered with the master DB, it can be utilized for the solution recommendation of [1]. (Example: It can be recommended that "GHG emissions can be significantly decreased with product Y by Company B, which is similar to product X by Company A, with equal functions and price" or the like.)

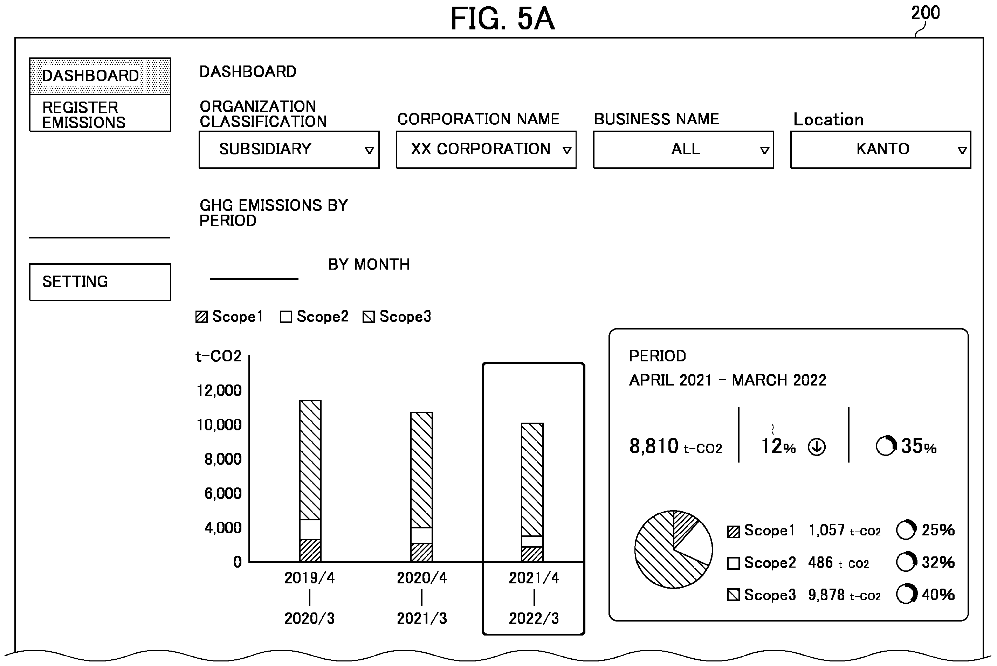

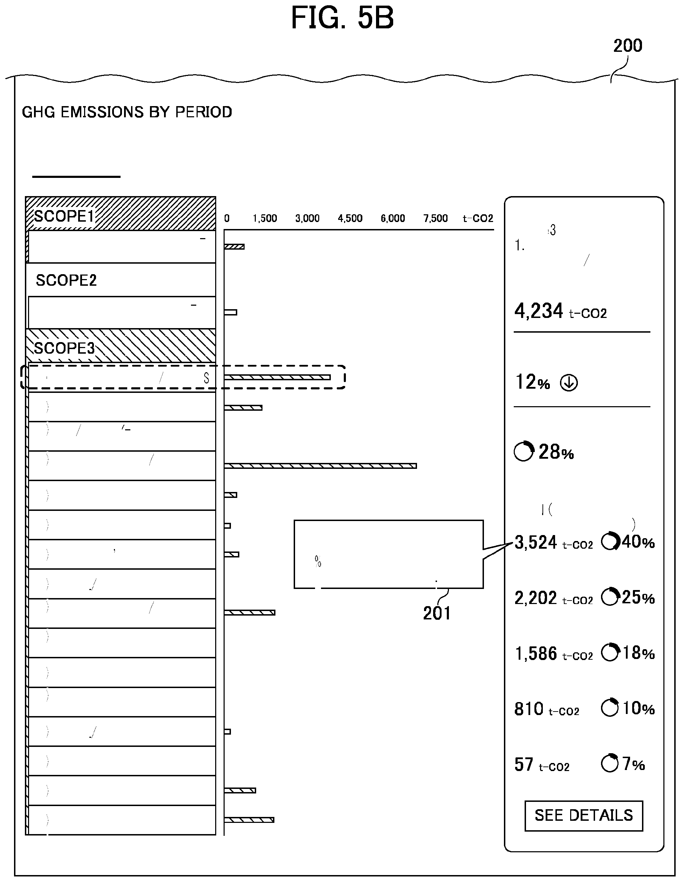

Next, functions of the service provider server 1 will be described with reference to screens of FIGS. 5 to 8. First, a dashboard screen will be described. FIGS. 5 to 8 are diagrams showing examples of the dashboard screen displayed on each user's My Page on the website disclosed by the service provider server 1 of FIGS. 2 and 3.

The dashboard screens shown in FIGS. 5A and 5B are a dashboard screen 200 (by fiscal year) displayed on each user's My Page on the website disclosed by the service provider server 1 of FIGS. 2 and 3. On the dashboard screen 200, a visualization area by period and a visualization area by category are provided. In the visualization area by period, pull-down menus such as Organization classification, Corporation name, Business name, and Location are arranged. By a user (a person in charge in a company) performing a selection operation on each pull-down menu, bar graphs, a pie graph, and numerical values are presented on his user terminal 2, in which GHG emissions are shown for each Scope (for each Category) in color, for each period. In the visualization area by Category, a pull-down menu for specifying a period by year or by month, and GHG emissions for each Scope in a specified area are displayed in bar graphs and as numerical values.

Scope 1 indicates direct GHG emissions by the business operator itself. Scope 2 indicates indirect GHG emissions due to use of energy supplied from other companies. Scope 3 has been newly added recently and is a concept showing how much GHG is emitted by the supplier side. Scope 3 is divided in fifteen Categories, and disclosure of GHG emissions for each Category has been increasingly performed.

The specific fifteen Categories are: "Purchased goods and services", "Capital goods", "Fuel- and energy-related activities" "Upstream transportation and distribution", "Waste generated in operations", "Business travel", "Employee commuting", "Upstream leased assets", "Downstream transportation and distribution", "Processing of sold products", "Use of sold products", "End-of-life treatment of sold products", "Downstream leased assets", "Franchises", "Investments".

On the dashboard screen 200, for example, when an operation of selecting the item of "Purchased goods and services" is performed by the user from among items of Scope 3 in the visualization area by category, Category, Total emissions, Ratio to previous fiscal year, Ratio compared with all bases, and Items with high emissions are displayed on a right area of the dashboard screen 200 as numerical values and rates (%). In this example, 4,234 t-CO2 is presented as Total emissions, 12% as Ratio to previous year, 28% as Ratio compared with all bases, and top five elements, for example, iron (3,524 t-CO2, 40%), magnesium (2,202 t-CO2, 25%), special steel (1,586 t-CO2, 18%), polyethylene (810 t-CO2, 10%), and epoxy resin (57 t-CO2, 7%) as the items with high emissions.

Here, for example, when the user moves a cursor to the field of the top five elements by a mouse operation, a comment balloon 201 including recommendation information is popup-displayed at a position corresponding to the field of the elements.

By viewing the dashboard screen 200, the user (the person in charge in the company) can understand which element is an item with high GHG emissions, what is the rate of the GHG emissions relative to the whole, and the like at a glance. Further, by the user (the person in charge in the company) viewing the recommendation information in the popup-displayed comment balloon 201, it is possible to obtain the direction of efforts to be made to achieve a goal as a company, and hints therefor.

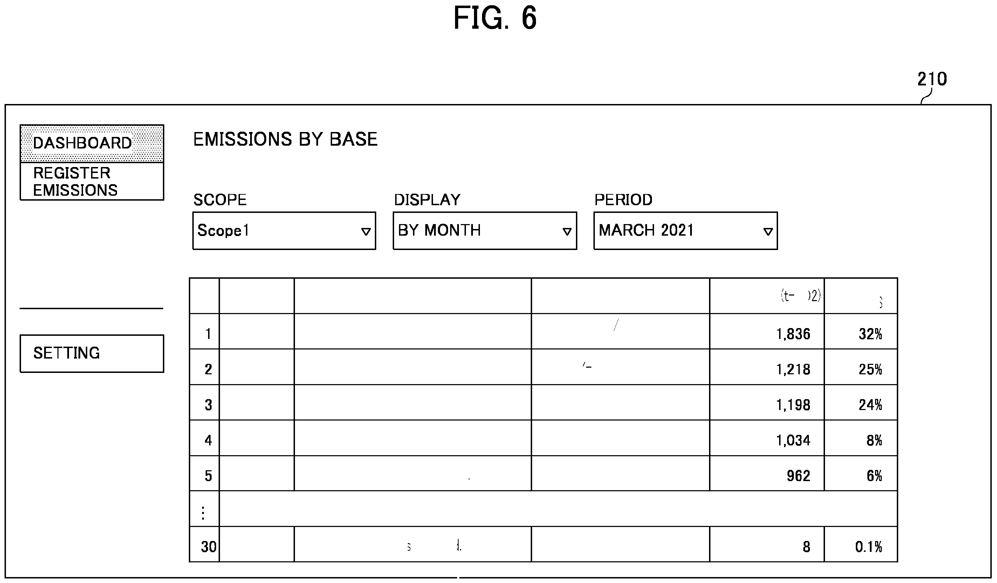

A dashboard screen 210 shown in FIG. 6 is a screen for presenting emissions by base to the user, and pull-down menus of Scope (from which any of Scopes 1, 2, and 3 is to be selected), Display (from which any of "By month" and "By fiscal year" is selected), and Period (from which, for example, fiscal year or year/month is selected), and a list of bases of the user (company) are displayed. In the list of bases, information about the company itself alone and information about each of its subsidiaries are separately displayed for the items of Organization classification, Corporation name, Business name, Emissions, and Ratio compared with all bases. Therefore, it is possible to grasp GHG emissions for each base in the user's company.

In the example of the dashboard screen 210, the GHG emissions and the ratio compared with all bases (%) for each of the company itself alone and its subsidiaries are displayed on the user terminal 2, by Scope (Scope 1), Display (By month), and Period (for example, March 2021) being specified on the pull-down menus. Therefore, the user who is a person in charge, can understand the rate of GHG emissions for each base of the company (at which base GHG emissions is high, at which base GHG emissions is low, and the like) at a glance.

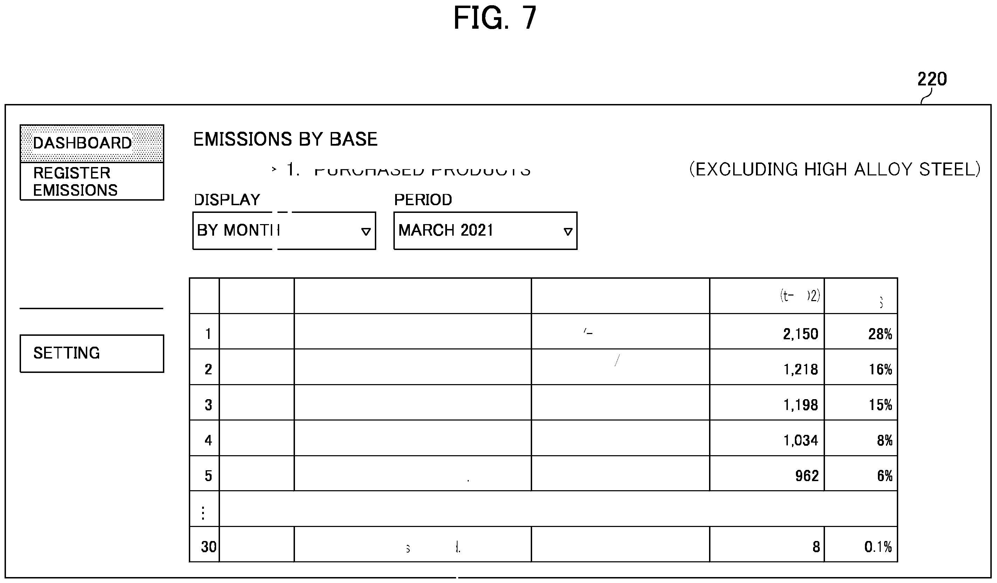

A dashboard screen 220 shown in FIG. 7 is a screen showing detailed content of emissions by base. For example, for the element of "Iron (excluding high alloy steel)" of "1. Purchased goods and services" of "Scope 3", content by base (GHG emissions and a ratio compared with all bases) for a display period (by month, March 2021) selected on the pull-down menus of Display and Period is displayed. Therefore, the user who is a person in charge can understand, for the element of Iron (excluding high alloy steel) in his company, a rate of GHG emissions for each base (at which base GHG emissions is high, at which base GHG emissions is low, and the like) at a glance.

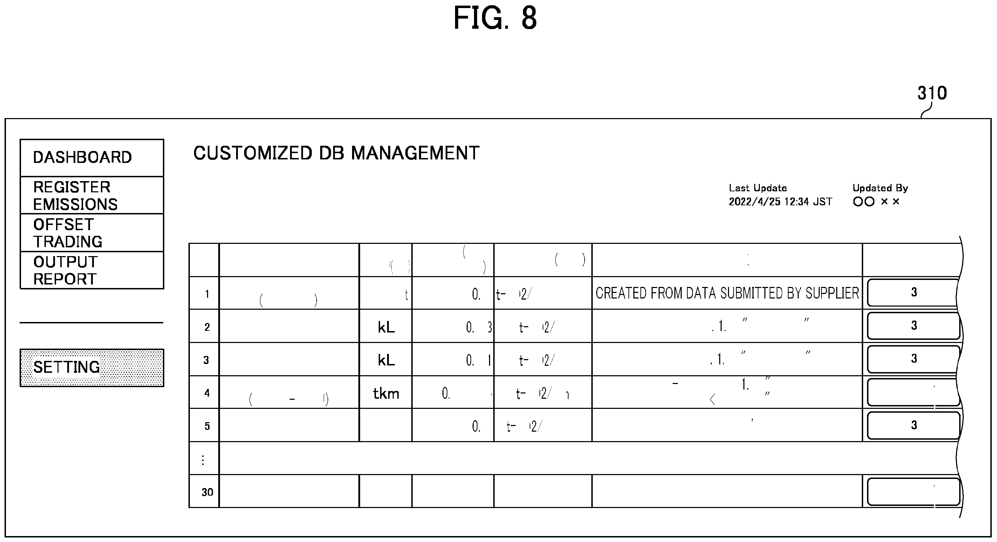

Next, a customized DB management screen 310 will be described with reference to FIG. 8. On the customized DB management screen 310 shown in FIG. 8, it is possible to create a DB in which intensities that are individually used and intensities of IDEA, CFPDB (Carbon Footprint of Product DB), and the like are collected. Content of management is Item name, Amount of activity (unit), Intensity (numerical value), Intensity (unit), Source, and the like.

An embodiment of the present invention has been described above. The present invention, however, is not limited to the embodiment described above, and modifications, improvements, and the like within a range of being able to achieve the object of the present invention are included in the present invention.

Though carbon dioxide (CO2) is exemplified as an example of greenhouse gas (GHG) in the embodiment described above, any other greenhouse gas is also possible.

Though description has been made, with, for example, items of By year/By month, By corporation, By base, By Scope, and By Category, and the like as examples of elements in the embodiment described above, other elements may be selected, and any one or more of such elements that the amount of activity changes thereby can be adopted. Further, though reduction both of solution recommendation and authentication/disclosure of an intensity DB are described in the embodiment described above, it is sufficient if either the solution recommendation or the authentication/disclosure is performed.

Further, for example, the series of processes described above can be executed by hardware or by software. In other words, the functional configuration of Figure 3 is merely an exemplification, and the functional configuration is not limited thereto. In other words, it is sufficient if an information processing apparatus has a function capable of executing the series of processes described above as a whole, and which functional blocks and databases are to be used to realize the function is not especially limited to the example of Figure 3. Further, places where the functional blocks and the databases exist are not especially limited to the places in Figure 3, and arbitrary places are possible. For example, at least some of the functional blocks and databases required to execute the various kinds of processes may be transferred to each user terminal 2, the verification server 3, or the like. On the contrary, the functional blocks and databases of each user terminal 2 or the verification server 3 may be transferred to the service provider server 1 or the like. Further, each of one functional block and one database may be configured with a single piece of hardware, a single piece of software, or a combination thereof.

In the case of causing the series of processes to be executed by software, a program constituting the software is installed into a computer or the like from a network or a recording medium. The computer may be a computer incorporated in dedicated hardware. Further, the computer may be a computer capable of executing various kinds of functions by various kinds of programs being installed, for example, a general-purpose smartphone or personal computer in addition to a server.

A recording medium that includes such a program is not only configured with a removable medium not shown, which is distributed to each user and the like separately from the apparatus body to provide the program but also configured with a recording medium or the like provided for each user and the like in a state of being incorporated in the apparatus body in advance.

In the present specification, the steps implementing the program recorded in a recording medium include not only processes that are chronologically implemented in order of the processes but also processes that are not necessarily chronologically implemented but executed in parallel or individually. Further, in the present specification, it is assumed that the term "system" means an overall apparatus configured with a plurality of devices, a plurality of means, and the like.

In other words, an information processing apparatus to which the present invention is applied only needs to have a configuration shown as below and can take various of embodiments. An information processing apparatus to which the present invention is applied (for example, the service provider server 1 of FIG. 3) includes:
registration unit (for example, the registration unit 61 of FIG. 3) configured to, for each of items used for calculation of a user's greenhouse gas emissions (GHG emissions), register an amount of activity in association with one or more such elements that the amount of activity changes thereby (for example, by year/by month, by corporation, by base, by Scope, and by Category);
required reductions calculation unit (for example the required reductions calculation unit 62 of FIG. 3) configured to, based on target greenhouse gas emissions (GHG emissions) reductions to be achieved by a predetermined deadline set by the user and content registered by the registration unit, calculate a degree of greenhouse gas emissions (GHG emissions) that the user is required to make efforts to reduce by the predetermined deadline;
solution generation unit (for example, the solution generation unit 63 of FIG. 3) configured to identify an element among the one or more elements expected to be impactful to reduction (expected to have a level of emissions reduction effect higher than a predetermined value) based on a calculation result of the required reductions calculation unit (for example, the required reductions calculation unit 62 of FIG. 3) and generate a solution about the element; and
solution presentation unit (for example, the solution presentation unit 64 of FIG. 3) configured to present recommendation information including the identified element and the generated solution to the user. It is possible to provide support for achievement of a goal, for the problem of a company and its bases that is relatively difficult to quantify, such as reduction in greenhouse gas (GHG) emissions, by presenting recommendation information including an element and a generated solution to a user as described above.

The information processing apparatus described above (for example, the service provider server 1 of FIG. 3) further includes
registered content presentation unit (for example, the registered content presentation unit 65 of FIG. 3) configured to visualize the content registered by the registration unit (for example, the registration unit 61 of FIG. 3) to present the content to the user. Thereby, the problem of a company and its bases that is relatively difficult to quantify, such as reduction in greenhouse gas (GHG) emissions, is visualized in a form suitable for the company, and it is possible to provide support for achievement of a goal.

The required reductions calculation unit (for example, the required reductions calculation unit 62 of FIG. 3) can further calculate a degree of achievement of the user's greenhouse gas emissions (GHG emissions) in a current situation, and expectation of achievement of the user's target greenhouse gas emissions (GHG emissions) reductions in future when estimated at a current level compared with a previous year's reduction level, based on the content registered by the registration unit; and
calculate the degree of greenhouse gas emissions that the user is required to make efforts to reduce by the predetermined deadline, based on calculation results thereof and the target greenhouse gas emissions (GHG emissions) reductions.

The registration unit (for example, the registration unit 61 of FIG. 3) can further register the plurality of items and intensity used for each of the plurality of items, as initial registration.

Greenhouse gas emissions (GHG emissions) for a predetermined item is calculated by multiplying the amount of activity for the predetermined item registered by the registration unit (for example, the registration unit 61 of FIG. 3) by the intensity for the predetermined item registered by the registration unit (for example, the registration unit 61 of FIG. 3).

It is possible to further comprise disclosure unit (for example, the intensity disclosure unit 66 of FIG. 3) configured to disclose the intensity used for calculation of the user's greenhouse gas emissions (GHG emissions) registered by the registration unit (for example, the registration unit 61 of FIG. 3) to other users.

The disclosure unit (for example, the intensity disclosure unit 66 of FIG. 3) discloses the intensity that is covered by a guarantee by validity thereof having been verified by a predetermined third-party organization (for example, the verification server 3 of a standardization organization of FIG. 3). Thereby, it is possible to disclose reliable intensity. Though a guarantee is provided for each intensity in the above example, a guarantee may be provided for each individual DB of each user with which a plurality of intensities are registered.

An information processing method executed by an information processing apparatus (for example, the service provider server 1 of FIG. 3) can include:
a registration step (step S101 of FIG. 4 or the like) of, for each of items used for calculation of a user's greenhouse gas emissions (GHG emissions), registering an amount of activity in association with one or more such elements that the amount of activity changes thereby;
a required reductions calculation step (step S102 of FIG. 4 or the like) of, based on target greenhouse gas emissions (GHG emissions) reductions to be achieved by a predetermined deadline set by the user and content registered at the registration step, calculating a degree of greenhouse gas emissions that the user is required to make efforts to reduce by the predetermined deadline;
a solution generation step (step S103 of FIG. 4 or the like) of identifying an element among the one or more elements expected to be impactful to reduction based on a calculation result of the required reductions calculation step and generating a solution about the element; and
a solution presentation step (step S104 of FIG. 4 or the like) of presenting recommendation information including the identified element and the generated solution to the user.

A program can cause a computer to execute a control process, the control process comprising:
a registration step (step S101 of FIG. 4 or the like) of, for each of items used for calculation of a user's greenhouse gas emissions (GHG emissions), registering an amount of activity in association with one or more such elements that the amount of activity changes thereby;
a required reductions calculation step (step S102 of FIG. 4 or the like) of, based on target greenhouse gas emissions (GHG emissions) reductions to be achieved by a predetermined deadline set by the user and content registered at the registration step, calculating a degree of greenhouse gas emissions (GHG emissions) that the user is required to make efforts to reduce by the predetermined deadline;
a solution generation step (step S103 of FIG. 4 or the like) of identifying an element among the one or more elements expected to be impactful to reduction based on a calculation result of the required reductions calculation step and generating a solution about the element; and
a solution presentation step (step S103 of FIG. 4 or the like) of presenting recommendation information including the identified element and the generated solution to the user.

### EXPLANATION OF REFERENCE NUMERALS

- 1: service provider server
- 2, 2-a to 2-n: user terminal
- 3: verification server
- 11: CPU
- 12: ROM
- 18: storage unit
- 19: communication unit
- 50: site management unit
- 61: registration unit
- 62: required reductions calculation unit
- 63: solution generation unit
- 64: solution presentation unit
- 65: registered content presentation unit
- 66: intensity disclosure unit
- 121: DB

## Claims

1. An information processing apparatus comprising:
registration unit configured to, for each of items used for calculation of a user's greenhouse gas emissions, register an amount of activity in association with one or more such elements that the amount of activity changes thereby;
required reductions calculation unit configured to, based on target greenhouse gas emissions reductions to be achieved by a predetermined deadline set by the user and content registered by the registration unit, calculate a degree of greenhouse gas emissions that the user is required to make efforts to reduce by the predetermined deadline;
solution generation unit configured to identify an element among the one or more elements expected to be impactful to reduction based on a calculation result of the required reductions calculation unit and generate a solution about the element; and
solution presentation unit configured to present recommendation information including the identified element and the generated solution to the user.

2. The information processing apparatus according to claim 1, further comprising: registered content presentation unit configured to visualize the content registered by the registration unit to present the content to the user.

3. The information processing apparatus according to claim 1, wherein
the required reductions calculation unit further calculates a degree of achievement of the user's greenhouse gas emissions in a current situation, and expectation of achievement of the target greenhouse gas emissions reductions of the user in future when estimated at a current level compared with a previous year's reduction level, based on the content registered by the registration unit; and
calculates the degree of greenhouse gas emissions that the user is required to make efforts to reduce by the predetermined deadline, based on calculation results thereof and the target greenhouse gas emissions reductions.

4. The information processing apparatus according to claim 1, wherein
the registration unit further registers the plurality of items and intensity used for each of the plurality of items.

5. The information processing apparatus according to claim 4, wherein
greenhouse gas emissions for a predetermined item are calculated by multiplying the amount of activity for the predetermined item registered by the registration unit by the intensity for the predetermined item registered by the registration unit.

6. The information processing apparatus according to claim 4, further comprising:
disclosure unit configured to disclose the intensity used for calculation of the user's greenhouse gas emissions registered by the registration unit to other users.

7. The information processing apparatus according to claim 6, wherein
the disclosure unit discloses the intensity that is covered by a guarantee by validity thereof having been verified by a predetermined third-party organization.

8. An information processing method executed by an information processing apparatus, the information processing method comprising:
a registration step of, for each of items used for calculation of a user's greenhouse gas emissions, registering an amount of activity in association with one or more such elements that the amount of activity changes thereby;
a required reductions calculation step of, based on target greenhouse gas emissions reductions to be achieved by a predetermined deadline set by the user and content registered in the registration step, calculating a degree of greenhouse gas emissions that the user is required to make efforts to reduce by the predetermined deadline;
a solution generation step of identifying an element among the one or more elements expected to be impactful to reduction based on a calculation result of the required reductions calculation step and generating a solution about the element; and
a solution presentation step of presenting recommendation information including the identified element and the generated solution to the user.

9. A program that causes a computer to execute a control process, the control process comprising:
a registration step of, for each of items used for calculation of a user's greenhouse gas emissions, registering an amount of activity in association with one or more such elements that the amount of activity changes thereby;
a required reductions calculation step of, based on target greenhouse gas emissions reductions to be achieved by a predetermined deadline set by the user and content registered in the registration step, calculating a degree of greenhouse gas emissions that the user is required to make efforts to reduce by the predetermined deadline;
a solution generation step of identifying an element among the one or more elements expected to be impactful to reduction based on a calculation result of the required reductions calculation step and generating a solution about the element; and
a solution presentation step of presenting recommendation information including the identified element and the generated solution to the user.
